(19)

Europäisches
Patentamt
European
Patent Office
Office européen
des brevets

(11) **EP 2 257 044 A1**

(12) **EUROPEAN PATENT APPLICATION**

(43) Date of publication:
**01.12.2010 Bulletin 2010/48**

(51) Int Cl.:
**H04N 5/217** $^{(2006.01)}$

(21) Application number: **09305502.8**

(22) Date of filing: **29.05.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **Thomson Licensing SA
92130 Issy-les-Moulineaux (FR)**

(72) Inventors:
• **Thébault, Cédric
78050, VS-Villingen (DE)**
• **Endress, Wolfgang
78050, VS-Villingen (DE)**

(74) Representative: **Rittner, Karsten
Deutsche Thomson OHG
European Patent Operations
Karl-Wiechert-Allee 74
30625 Hannover (DE)**

(54) **Method and device for processing a raw output value of a target pixel**

(57) A method for determining a consolidated output value of a target pixel is proposed. Said target pixel has a colour, is comprised in an imaging device, provides a raw output value and is surrounded in the imaging device, at least partly, by neighbouring pixels which have said colour and provide further raw output values. Said method comprises using the raw output value and the further raw output values for determining a filtered defectiveness value, using the further raw output values for determining a threshold value, using the further raw output values for determining an alternative output value, using the filtered defectiveness value and the threshold value for determining a first weight for weighting the raw output value and for determining a second weight for weighting the alternative output value and determining the output value as weighted sum of the raw output value and the alternative output value.

| GP | RP | GP | RP | GP | RP | GP |
|----|----|----|----|----|----|----|
| BP | GP | BP | GP | BP | GP | BP |
| GP | RP | GP | RP | GP | RP | GP |
| BP | GP | BP | GP | BP | GP | BP |
| GP | RP | GP | RP | GP | RP | GP |
| BP | GP | BP | GP | BP | GP | BP |
| GP | RP | GP | RP | GP | RP | GP |

Fig. 1

**Description**

TECHNICAL FIELD

The invention is made in the field of detecting and correcting defective pixels in imaging devices.

BACKGROUND OF THE INVENTION

Imaging devices, like a CMOS or CCD imager chip, consist of an array of pixel cells, each comprising a photo diode and a readout circuit. Each CMOS pixel generates an electrical signal depending on the amount of light impinging upon the pixel. This electrical signal is typically converted into raw digital output value by an analog to digital converter.

For grey-scale images sensors (black-and-white image sensors) one pixel array is sufficient. Colour image sensors usually require three pixel arrays, whereby each pixel array is responsible for receiving the information of a colour component of the image, for instance red, green and blue.

Alternatively, a single pixel array may be partitioned into three subsets or grids of pixels with a first subset of pixels being used for sensing green colour component, also shortly referred to as "green pixels", a second subset of pixels being used for sensing red colour component ("red pixels") and a third subset of pixels being used for sensing blue colour component ("blue pixels"). This partitioning is commonly achieved by a spatial pattern known as Bayer Pattern (US Patent US03971065) according to which every second pixel is a green pixel while the remaining non-green pixels are either red or blue, with red pixels and blue pixels alternating among the remaining non-green pixels. Thus, 50% of the pixels are green pixels, 25% are red and the other 25% are blue.

CMOS sensor arrays can be manufactured using a standard CMOS process. Such a process allows other circuits to be integrated on a single chip. Examples of additional circuitry that may be included are analog-to-digital converters (ADC), digital controllers for read-out from the CMOS sensor, digital signal processing cores for signal post-processing or the like.

Although image sensors like CMOS or CCD can be fabricated at low cost, they typically suffer from randomly positioned defective pixels. For instance, random pixel defects generated during CMOS wafer manufacturing tend to limit the percentage of devices that are usable as image sensors. In other words, an image sensor that has too many defective pixels may have to be discarded because of quality and performance standards. However, for economic reasons and in order to increase the manufacturing yield, some random defective pixels are typically accepted even in image sensors used for professional devices such as television cameras. It is desirable to detect defective pixels and correct the video information provided by those pixels using signal processing techniques, if possible.

Defective pixels are mainly created during manufacturing, but some pixels become defective over time. Spot noise caused by defective pixels strongly degrades image quality. Accordingly, a system and method of detecting and correcting defective pixels is desirable.

U.S. Patent application 2009040343 provides an apparatus for defective pixel detection and correction. The apparatus comprises a defective pixel detection unit and a defective pixel correction unit. The defective pixel detection unit acquires a detection pixel and a plurality of neighbouring pixels, and determines that the detection pixel is a defective pixel when a first condition and a second condition are satisfied, wherein the defective pixel is located in the centre of a n*n block comprising the detection and neighbouring pixels, the first condition describes that at most one neighbouring pixel whose value differs from the value of the detection pixel within a predefined threshold is detected, and the second condition describes that all the neighbouring pixels other than the detected neighbouring pixel is smaller or larger than the value of the detection pixel. The defective pixel correction unit corrects a value of the defective pixel determined by the defective pixel detection unit.

SUMMARY OF THE INVENTION

Using a predefined threshold comes along with the difficulty of determining a suitable threshold. A threshold too high may lead to defective pixels being treated as working properly while a threshold too low may lead to properly working pixels being treated as defective, e.g. if the image region which a pixel and its neighbours depict is very vivid and active. Further, a real defective neighbour influences determination of defectiveness of a pixel in such way that the pixel may appear defective although it is not.

For overcoming these difficulties, the invention proposes a method for processing a raw output value of a target pixel according to claim 1. Said target pixel has a colour, is comprised in an imaging device and is surrounded in the imaging device, at least partly, by neighbouring pixels which have said colour and provide further raw output values.

Said proposed method comprises the steps of using the raw output value and the further raw output values for determining a filtered defectiveness value for the target pixel, using the further raw output values for determining a threshold value, using the further raw output values for determining an alternative output value, using the filtered defectiveness value and the threshold value for determining a first weight for weighting the alternative output value and for determining a second weight for weighting the raw output value and adding the alternative output value weighted with the first weight and the raw output value weighted with said second weight.

Filtering the defectiveness value of a target pixel with defectiveness values determined for neighbouring pixels prevents propagation of defectiveness from real defective pixels to its non-defective neighbours. Further, using the further raw output values for determining the threshold value allows for adjusting the threshold according to the activity or vividness of the depicted image region, thus avoiding correctly sensing pixels being determined as defective due to the activity or vividness of the depicted image region.

In an embodiment, determining the filtered defectiveness value for the target pixel comprises determining, for the target pixel as well as for other pixels of said colour, a minimum among defectiveness value candidates, said defectiveness value candidates being determined using the raw output value of the respective pixel and other raw output values of pairs of other pixels neighbouring the respective pixel, determining a weighted sum of the determined minima wherein the minimum determined for the target pixel has a larger weight than each of the minima determined for the other pixels and using the weighted sum for determining the filtered defectiveness value of the target pixel.

For instance, the pairs of neighbouring pixels used for determining said defectiveness value candidates for said target pixel comprise one pixel of the respective pair is located in a row preceding the target pixel's row and the other pixel is located in a row succeeding the target pixel's row, one pixel of the respective pair is located in a column preceding the target pixel's column and the other pixel is located in a column succeeding the target pixel's column, or one pixel of the respective pair is located in the target pixel's column and the other pixel is located the target pixel's row.

In a further embodiment, determining the threshold value comprises: determining an activity value using the further raw output values, determining a first maximum of the minima determined for the other pixels and determining the threshold value as maximum of: the activity value, the first maximum and a first non-zero constant.

The first and second weight may be determined by determining a difference value between the filtered defectiveness value and the threshold value, determining whether the difference value is negative and if so, setting the difference value to zero, weighting the difference value using a user-defined weight divided by said threshold value, determining whether the weighted difference value is larger than a user-defined threshold value and if so, assigning, to the second weight, said user-defined threshold value, otherwise assigning, to the second weight, said weighted difference value, and assigning, to the first weight, the difference between said user-defined threshold and said second weight.

In yet a further embodiment, determining the alternative output value comprises: determining alternative value candidates and associated alternative value candidate probabilities wherein each alternative value candidate and its associated alternative value candidate probability are determined using the further raw output values of pairs of the neighbouring pixels, wherein, for each pair, pixels are located at opposite sides of the target pixel in the target pixel's row, pixels are located at opposite sides of the target pixel in the target pixel's column, one pixel of the respective pair is located in a row immediately preceding the target pixel's row and in a column immediately preceding the target pixel's column and the other pixel is located in a row immediately succeeding the target pixel's row and in a column immediately succeeding the target pixel's column, or one pixel of the respective pair is located in a row immediately preceding the target pixel's row and in a column immediately succeeding the target pixel's column and the other pixel is located in a row immediately succeeding the target pixel's row and in a column immediately preceding the target pixel's column, further using the determined alternative value candidate probabilities for weighting the determined alternative value candidates and using a sum of the determined alternative value candidates for determining the alternative output value.

In even yet a further embodiment the target pixel is a red colour pixel or a blue colour pixel and said method further comprises further using yet further raw output values of further neighbouring pixels being green colour pixels: for determining a filtered defectiveness value for the target pixel, for determining a threshold value, and/or for determining an alternative output value.

The invention further proposes an imaging device according to claim 8. Said imaging device comprising a target pixel having a colour and being surrounded, at least partly, by neighbouring pixels having said colour, wherein the pixels of the imaging device provide raw output values, said imaging device further comprises means for processing the raw output value of a target pixel, said means being adapted for performing one of the embodiments of said method for determining a consolidated output value of a target pixel proposed by the invention.

Further advantageous embodiments of the method and the imaging device are specified in the respective dependent claims.

## BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's scope and spirit defined in the claims.

In the figures:

Fig. 1    depicts an exemplary partitioning of an exemplary pixel array according to a Bayer pattern,

Fig. 2    depicts an exemplary pixel defect detection and correction unit comprising an exemplary green pixel detection and correction block,

Fig. 3    depicts, in more detail, the exemplary green pixel detection and correction block comprising an exemplary green defect estimation block, an exemplary green entropy estimation block, an exemplary green alternative value estimation block and an exemplary green pixel defect correction block,

Fig. 4    depicts, in more detail, the exemplary green defect estimation block comprising an exemplary green minimum defect direction block, an exemplary green defect filtering block and an exemplary green maximum defect evaluation block,

Fig. 5    depicts, in more detail, the exemplary green maximum defect evaluation block comprising an exemplary green pixel distribution block, an exemplary green line difference block, an exemplary green corner difference block and an exemplary green bend difference block,

Fig. 6    depicts an exemplary neighbourhood of a green pixel,

Fig. 7    depicts, in more detail, the exemplary green pixel distribution block,

Fig. 8    depicts, in more detail, the exemplary green line difference block,

Fig. 9    depicts, in more detail, the exemplary green corner difference block,

Fig. 10   depicts, in more detail, the exemplary green bend difference block,

Fig. 11   illustrates possible defectiveness propagation from real defective green pixels to its non- defective green neighbours,

Fig. 12   depicts, in more detail, the exemplary green entropy estimation block,

Fig. 13   depicts, in more detail, the exemplary green alternative value estimation block,

Fig. 14   depicts, in more detail, the exemplary green pixel defect correction block,

Fig. 15   depicts an exemplary neighbourhood of a red pixel,

Fig. 16   depicts an exemplary red pixel detection and correction block comprising an exemplary red defect estimation block, an exemplary red entropy estimation block, an exemplary red alternative value estimation block and an exemplary red pixel defect correction block,

Fig. 17   depicts, in more detail, the exemplary red defect estimation block comprising an exemplary red minimum defect direction block, an exemplary red defect filtering block and an exemplary red maximum defect evaluation block,

Fig. 18   depicts, in more detail, the exemplary red maximum defect evaluation block comprising an exemplary red pixel distribution block, an exemplary red line difference block and an exemplary red corner difference block,

Fig. 19   depicts, in more detail, the exemplary red line difference block,

Fig. 20   depicts a detail of the exemplary red line difference block,

Fig. 21   depicts, in more detail, the exemplary red corner difference block,

Fig. 22   depicts, in more detail, the exemplary red alternative value estimation block comprising an exemplary red direction probability evaluation block, and

Fig. 23    depicts, in more detail, the exemplary red direction probability evaluation block.

<u>EXEMPLARY EMBODIMENTS OF THE INVENTION</u>

The invention may be realized on any electronic device comprising an imaging device correspondingly adapted or a state-of-the-art imaging device and a correspondingly adapted processing device. For instance, the invention may be realized in a digital television camera, a mobile video phone, a personal computer having a web cam integrated or attached to it, a digital still camera or a digital video camera.

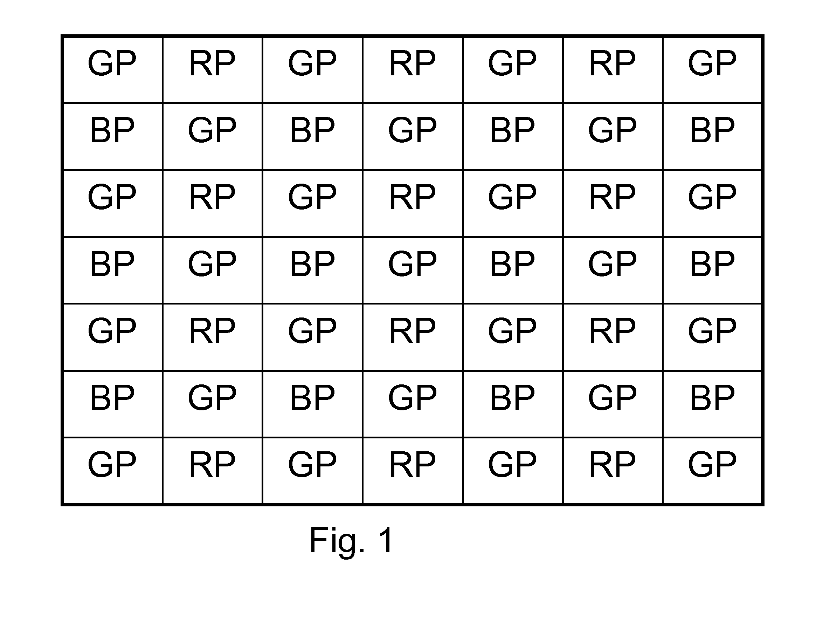

Fig. 1 depicts an exemplary partitioning of an exemplary pixel array according to a Bayer pattern. In the odd lines, green pixels GP are alternating with red pixels RP. And in the even lines, green pixels GP are alternating with blue pixels BP.

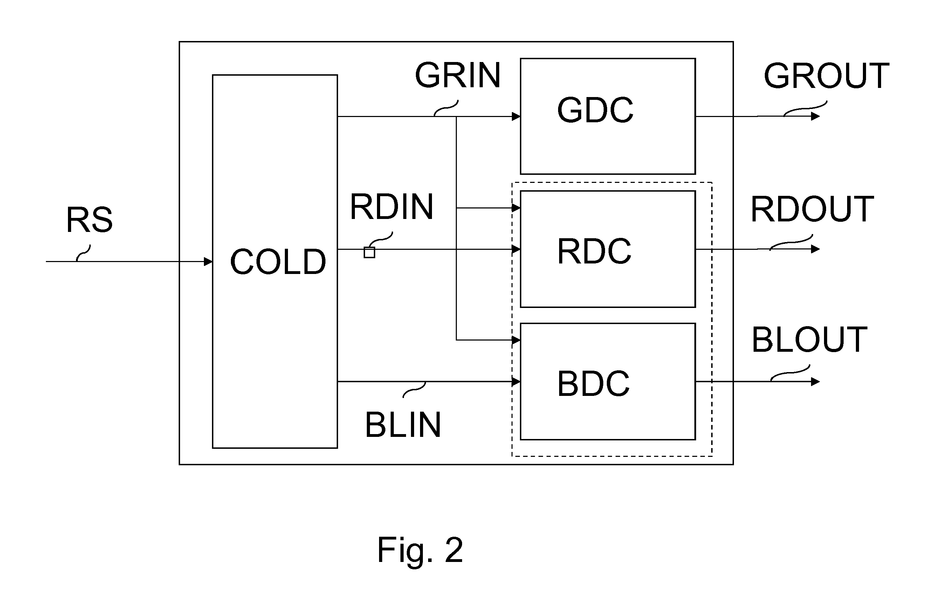

As exemplarily depicted in fig. 2, a raw stream RS being inputted into a colour demultiplexer COLD may be first demultiplexed by a colour demultiplexer COLD, although this is not necessary. At the output of the colour demultiplexer COLD, the stream of green pixel raw data GRIN looks like:

-    (...) G0G0G0G0 (...) on the odd lines and (...) 0G0G0G0G (...) on the even lines,

The stream of red pixel raw data RDIN looks like:

-    (...) 0R0R0R0 (...) on the odd lines and (...) 00000000 (...) on the even lines,

The stream of blue pixel raw data BLIN looks like:

-    (...) 00000000 (...) on the odd lines and (...) B0B0B0B0 (...) on the even lines.

The block COLD may also include the required line memories for raw data. These line memories will be need by green pixel detection and correction block GDC, red pixel detection and correction block RDC and blue pixel detection and correction block BDC.

Since the green pixels are twice as dense as red pixels or blue pixels, the green image part carries more information than the red or the blue image part. Therefore, red pixel detection and correction block RDC and blue pixel detection and correction block BDC make use of the green raw output value stream GRIN for detection and correction of defective blue or red pixels, respectively.

The green pixel detection and correction block GDC, the red pixel detection and correction block RDC and the blue pixel detection and correction block BDC output processed or corrected green image data GROUT, processed red image data RDOUT or processed blue image data BLOUT, respectively.

The correction blocks only need to run when the input is not blank:

-    the green correction block only need to run one clock over two ("G" clocks),

-    the red correction block one clock over two for the odd lines (and does not need to run for the even lines) ("R" clocks), and

-    the blue correction block one clock over two for the even lines (and does not need to run for the odd lines) ("B" clocks).

The correction blocks for the red and the blue pictures are identical (however different parameters can be used). This could be designed as a single block (and run during the odd lines for the red and during the even lines for the blue) or duplicated. To simplify the specification, they will be described here as separate blocks.

To limit the number of line memories, the red and the blue correction blocks use the unprocessed green picture. But it would be possible to use the corrected green picture (GROUT instead of GRIN) to process the red and the blue pictures if the increased number of line memories would not be a problem.

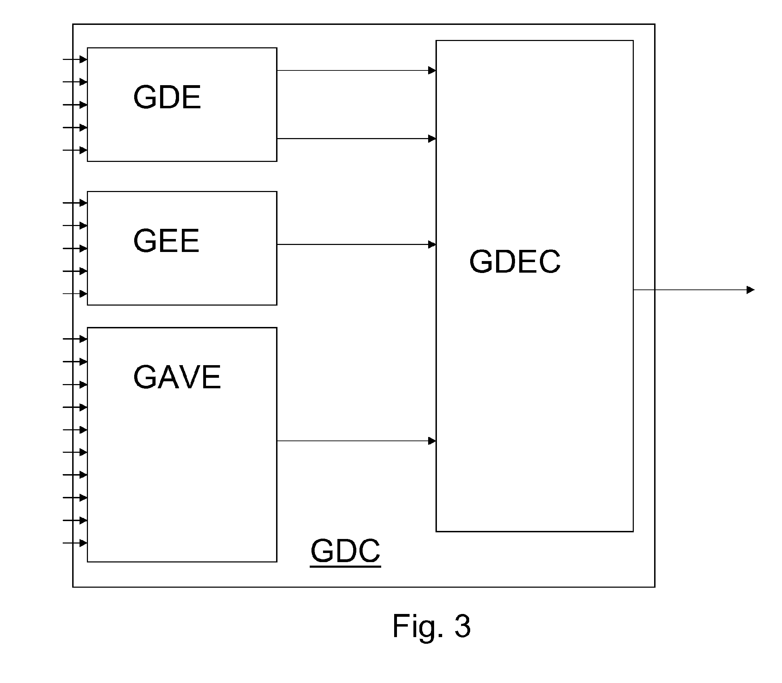

Fig. 3 depicts, in more detail, the exemplary green pixel detection and correction block GDC comprising an exemplary green defect estimation block GDE, an exemplary green entropy estimation block GEE, an exemplary green alternative value estimation block GAVE and an exemplary green pixel defect correction block GDEC.

To correct the green picture, the current green pixel is compared with its green neighbourhood inside the Green defectiveness evaluation block GDE. Further, the green neighbourhood is analyzed to measure the local activity (called entropy) inside the Green entropy evaluation block GEE. And, an alternate value is evaluated inside the Green alternate value evaluation block GAVE; this value will be used to correct or replace the original green pixel value when the original green pixel is considered as defective. The defectiveness of the current green pixel is compared to the entropy and to the defectiveness of its neighbour green pixels in order to decide whether the current green pixel has to be considered as defective or not and to replace or correct its raw output value accordingly. This is done in green pixel defect correction block GDEC.

The green pixel detection and correction block GDC has a delay of 6 image lines or rows between input and output.

The various blocks use different green input lines to compensate for the different delays.

That is, Green defectiveness evaluation block GDE receives the latest five lines as input and outputs a defectiveness value for pixels from six image lines above, in case of processing from top left to bottom right. Green defectiveness evaluation block GDE further outputs a neighbourhood defectiveness value for said pixels from a row six lines above the current pixel row.

Green entropy evaluation block GEE receives pixels of a total of five rows wherein the five rows are two to six lines above the current pixel's row. This block GDE outputs a filtered entropy or activity value determined for the neighbourhood of that pixel for which block GDE outputs a defectiveness value at a current time step.

And Green alternate value evaluation block GAVE receives pixels of a total of nine rows wherein the nine rows are two to ten lines above the current pixel's row. This block GAVE outputs an alternative value determined for the neighbourhood of that pixel for which block GDE outputs a defectiveness value at a current time step.

And Green defective pixel estimation and correction block GDEC receives the outputs of the blocks GDE GEE and GAVE as inputs and determines a processed output value which is derived from the raw output value and the alternative value.

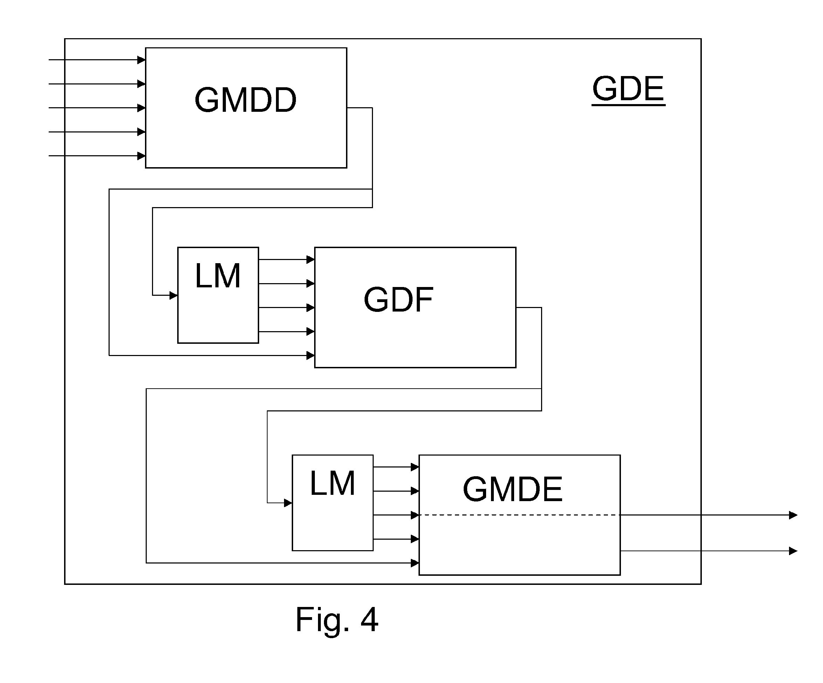

Fig. 4 depicts, in more detail, the exemplary green defect estimation block GDE comprising an exemplary green minimum defect direction block GMDD, an exemplary green defect filtering block GDF and an exemplary green maximum defect evaluation block GMDE.

The Green defectiveness evaluation block GDE estimates the defectiveness. This value represents the difference between the value of a green pixel and the values of its green neighbours.

This block GDE comprises the Green max defectiveness evaluation block GMDE which computes the maximum of the defectiveness value of the green neighbours.

The three blocks GMDD, GDF and GMDE use 5 lines input data and generate a value corresponding to the middle line, each introducing a delay of 2 lines. Therefore, the Green defective pixel detection & correction block has a delay of 6 lines between input and output. Further, some line memories LM (2 blocks of 4 line memories) are required to store the intermediate values to be processed.

Since the block GDE need to be run during the "G" clocks, only, the line memories LM could be shared with the Red/Blue defectiveness evaluation block(s).

The Green min dir diff evaluation block GMDD evaluates the differences between the central pixel and its neighbours. This is done in different directions (for instance, horizontal, vertical, diagonal) and under different curves (for instance: lines at 180˚, corners at 90˚ and bends at 135˚)

The minimum of all these differences will be used as defectiveness value. The three different blocks used for the different curves compute internally the minimum among the respective direction.

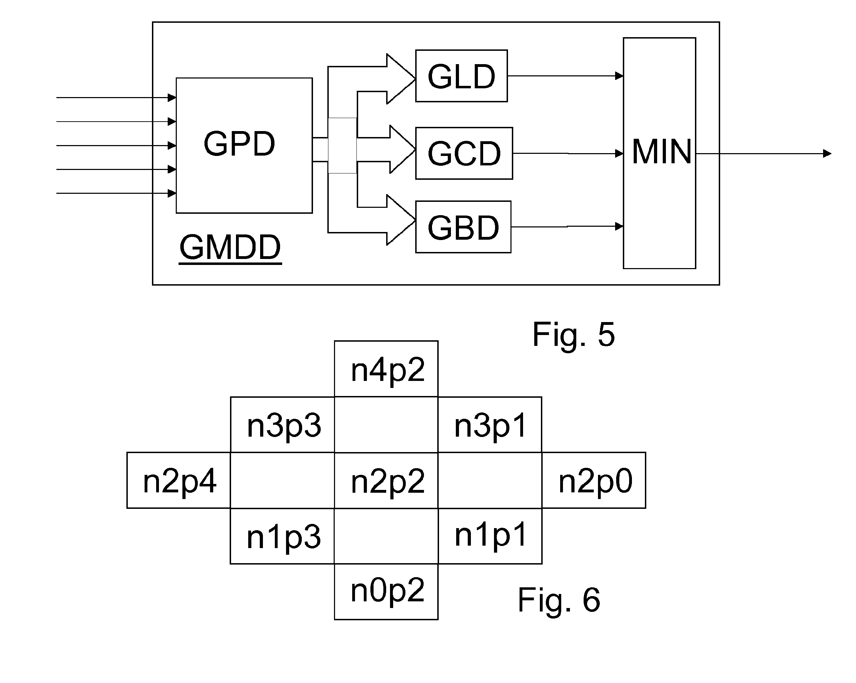

Fig. 5 depicts, in more detail, the exemplary green maximum defect evaluation block GMDD comprising an exemplary green line difference block GLD, an exemplary green corner difference block GCD and an exemplary green bend difference block GBD. Block GMDD further comprises a Green dir diff pixels distribution block GPD which generates 9 different green pixel values corresponding to 8 neighbour green pixels n4p2, n3p3, n3p1, n2p4, n2p0, n2p4, n1p3, n1p1 and n0p2 as exemplarily depicted in Fig. 6. The central pixel is n2p2.

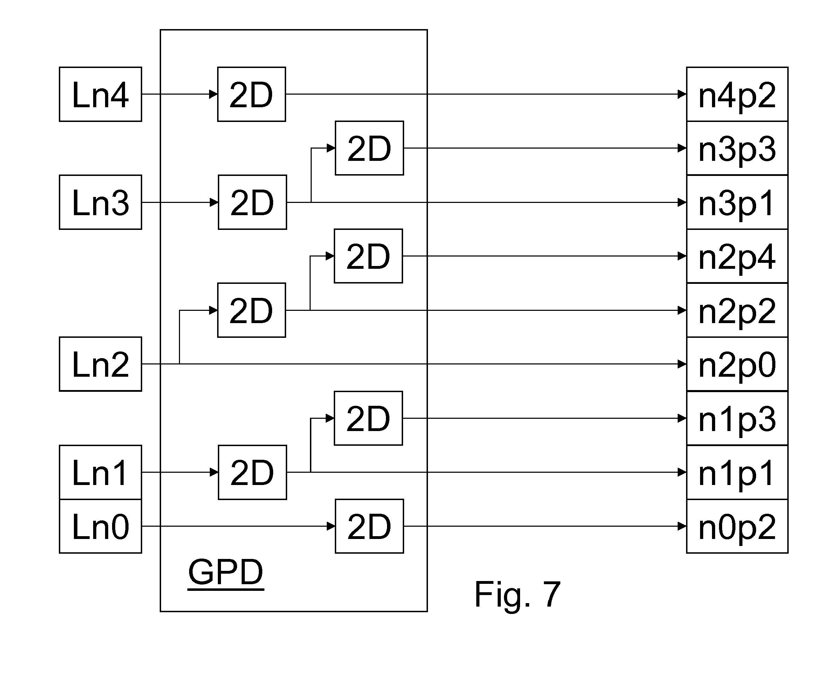

Block GPD is further depicted in Fig. 7. The block GPD receives rows Ln4, Ln3, Ln2, Ln1 and Ln0 as inputs, i.e. the four rows preceding the current row and the current row. These rows are subjected, at least partly, to different delays $\Delta$ and $2\Delta$ wherein delay $\Delta$ represents a delay of one pixel and delay $2\Delta$ represents a delay of two pixels.

Each of the blocks GLD, GCD and GBD output a minimum among lines, bends or corners passing through the pixel currently under processing. Then, block MIN finds the minimum among the line minimum, the corner minimum and the bend minimum.

The minimum of all these differences will be used as defectiveness value D( ) of the central pixel of the investigated neighbourhood, e.g. of pixel n2p2 in the example depicted in fig. 6. The 3 different blocks GLD, GCD and GBD are used for different curves to compute internally the minimum among the different directions wherein the directions can be chosen, differently.

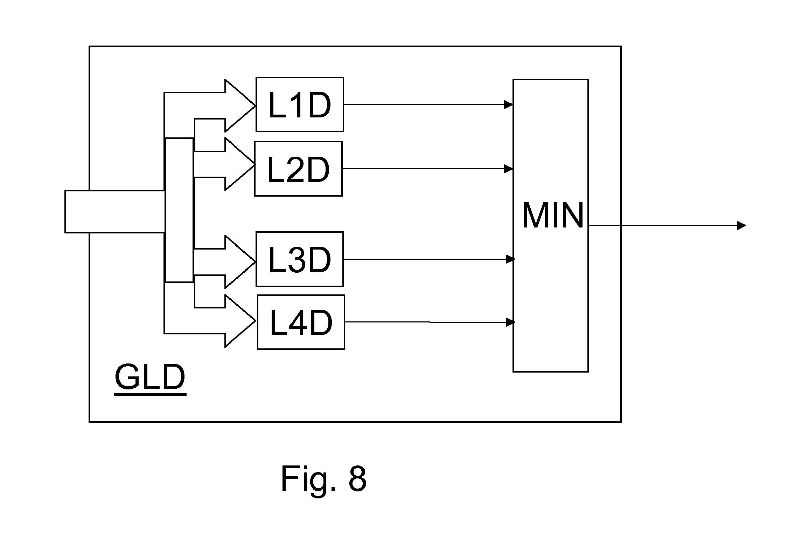

Fig. 8 depicts, in more detail, the exemplary green line difference block GLD. Said block comprises blocks L1D which determines differences in vertical direction and block L2D for horizontal direction. Further block L3D and L4D determine differences in diagonally descending or diagonally ascending direction. Each block computes an absolute of differences of defectiveness values based on defectiveness values determined for current pixel n2p2 and the respective two of its neighbours, i.e. its horizontal, its vertical, its diagonally descending or its diagonally ascending neighbours.

For instance, in block L1D an absolute of sum of difference between defectiveness values determined for horizontally neighbouring pixels n2p0 and current pixel n2p2 and difference between defectiveness values determined for horizontally neighbouring pixels n2p4 and current pixel n2p2. Or, the sum of absolutes of said differences may be used as difference value.

Let RO( ) denote a function providing the raw output value of the pixel of its argument. Then, block L1D may output for current pixel n2p2 the horizontal line defectiveness value D_L1(n2p2), for instance determined as:

$$D\_L1(n2p2) = abs(RO(n2p4) + RO(n2p0) - 2*RO(n2p2))$$

or as

$$D\_L1(n2p2) = abs(RO(n2p4) - RO(n2p2)) + abs(RO(n2p0) - RO(n2p2))$$

wherein abs() returns the absolute of its argument.

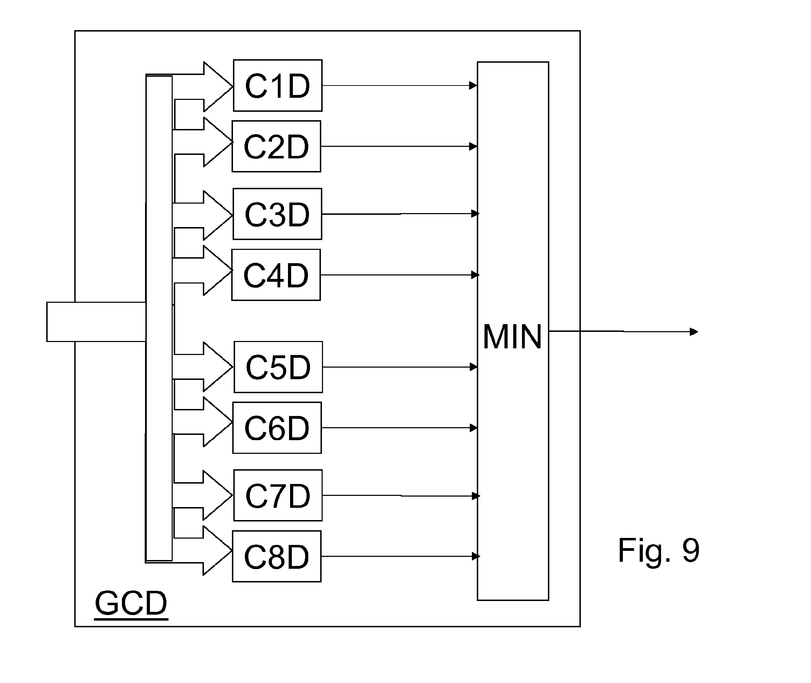

Fig. 9 depicts, in more detail, the exemplary green corner difference block GCD. Said block comprises blocks C1D, C2D, C3D, C4D, C5D, C6D, C7D and C8D which each calculate absolute of differences of defectiveness values much the same way as blocks L1D, L2D, L3D and L4D in green line difference block GLD but with the neighbouring pixels used being both in a same row adjacently preceding or succeeding the current pixel's row (n3p3 and n3p1, or, n1p3 and n1p1), both in a same column adjacently preceding or succeeding the current pixel's column (n3p1 and n1p1, or, n3p3 and n1p3) or one of the neighbouring pixels being chosen from the current pixel's column and the other of the neighbouring pixels being chosen from the current pixel's row (n2p4 and n0p2, or, n4p2 and n2p0, or, n2p0 and n0p2, or, n2p4 and n4p2).

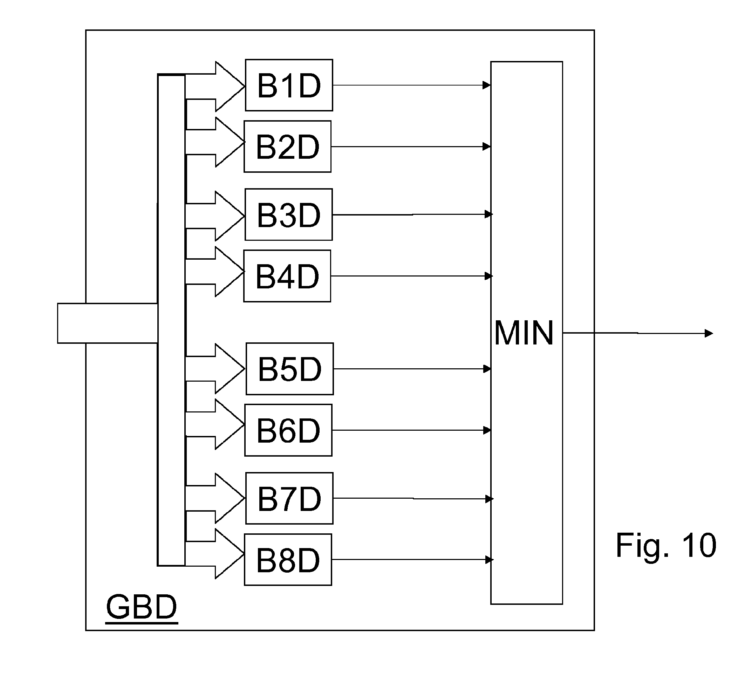

Fig. 10 depicts, in more detail, the exemplary green bend difference block GBD. Said block comprises blocks B1D, B2D, B3D, B4D, B5D, B6D, B7D and B8D which each calculate absolute of differences of defectiveness values much the same way as blocks L1D, L2D, L3D and L4D in green line difference block GLD but with one of the neighbouring pixels used being in a same row adjacently preceding or succeeding the current pixel's row or in a column adjacently preceding or succeeding the current pixel's column and the other neighbouring pixel being in the same row or in the same column as the current pixel. That is, the pairs of neighbouring pixels taken into account by block GBD are: n3p3 and n0p2, n3p3 and n2p0, n1p3 and n4p2, n1p3 and n2p0, n3p1 andn2p4, n3p1 and n0p2, n1p1 and n2p4, and, n1p1 and n4p2.

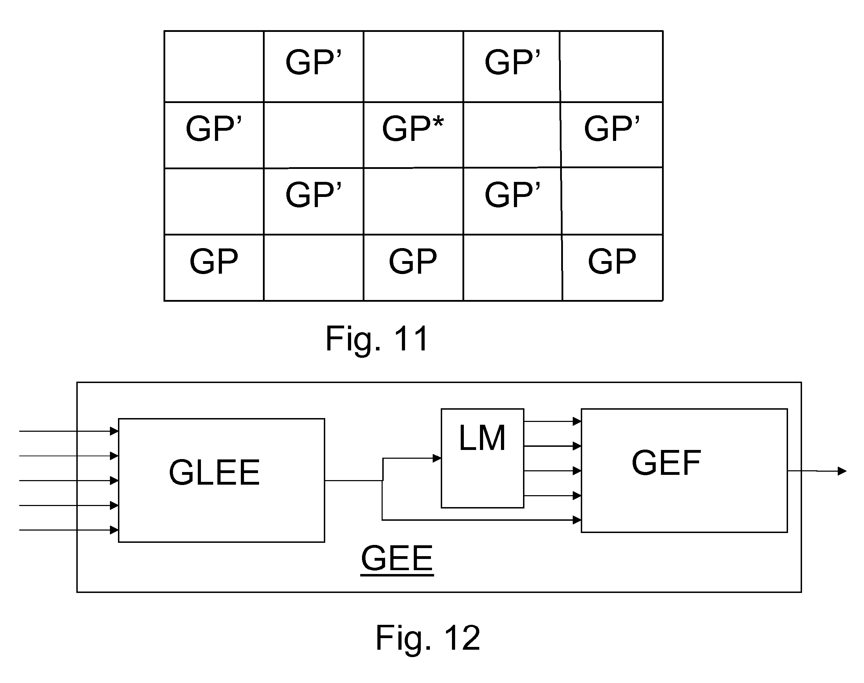

Fig. 11 exemplarily illustrates defectiveness propagation as it may occur without filtering. That is real defective green pixel GP* may make properly working neighbour green pixels GP' appear defective.

Such defectiveness propagation may be circumvented by green defectiveness filtering block GDF. This block forms a weighted sum of minimum defectiveness values determined for the current pixel as well as its neighbours. The weighted sum may be further scaled in dependency on the number of neighbouring defectiveness values taken into account. Thus, for current pixel n2p2, the filtered defectiveness value $D_f(n2p2)$ may be determined as:

$$D_f(n2p2) = (D(n6p2) + D(n5p3) + D(n5p1) + D(n4p4) + D(n4p0) + D(n3p3) + D(n3p1) + D(n2p2) + 2*D(n4p2))/8$$

After the filtering a neighbourhood defectiveness value ND() is determined which is the maximum among the filtered defectiveness values assigned to the current green pixel n2p2 and each of its neighbours neighbour green pixels n4p2, n3p3, n3p1, n2p4, n2p0, n2p4, n1p3, n1p1 and n0p2:

$$ND(n2p2) = max(D_f(n4p2) + D_f(n3p3) + D_f(n3p1) + D_f(n2p0) + D_f(n2p4) + D_f(n1p3) + D_f(n1p1) + D_f(n0p2))/8$$

Only if current green pixel n2p2 is assigned a local maximum defectiveness value, i.e. if $D_f$(n2p2)>ND(n2p2), pixel n2p2 is considered as potentially defective pixel.

Fig. 12 depicts, in more detail, the exemplary green entropy estimation block GEE which comprises green local entropy evaluation block GLEE, line memory LM and green entropy filtering block GEF which performs a filtering of entropy values corresponding the filtering of defectiveness values in block GDF.

The Green entropy evaluation block GEE analyses the green neighbourhood to measure the local activity, also called entropy. This value will be then compared to the defectiveness value.

When the entropy value is high, the defectiveness values will usually also be higher. This means that for a same defectiveness value, the pixel has a higher probability to be defective if the entropy is low.

Since this block GEE only need to run during the "G" clocks, these line memories could be shared with the Red entropy evaluation block and/or the Blue entropy evaluation block.

In an embodiment, the line memories LM are omitted and the result of filtering of the entropy values is determined, directly wherein the filtered entropy value is the result of 9x9 pixels block.

Entropy S(n2p2) of a pixel n2p2 may be determined as:

$$
\begin{aligned}
S(n2p2) = (&abs(RO(n4p2)-RO(n2p2)) + abs(RO(n3p3)-RO(n2p2)) + \\
&abs(RO(n3p1)-RO(n2p2)) + abs(RO(n2p0)-RO(n2p2)) + \\
&abs(RO(n2p4)-RO(n2p2)) + abs(RO(n1p3)-RO(n2p2)) + \\
&abs(RO(n1p1)-RO(n2p2)) + abs(RO(n0p2)-RO(n2p2)))/8
\end{aligned}
$$

The filtered entropy $S_f$(n2p2) of pixel n2p2 may be determined as:

$$
\begin{aligned}
S_f(n2p2) = (&S(n4p2) + S(n3p3) + S(n3p1) + S(n2p0) + S(n2p4) + \\
&S(n1p3) + S(n1p1) + S(n0p2))/8
\end{aligned}
$$

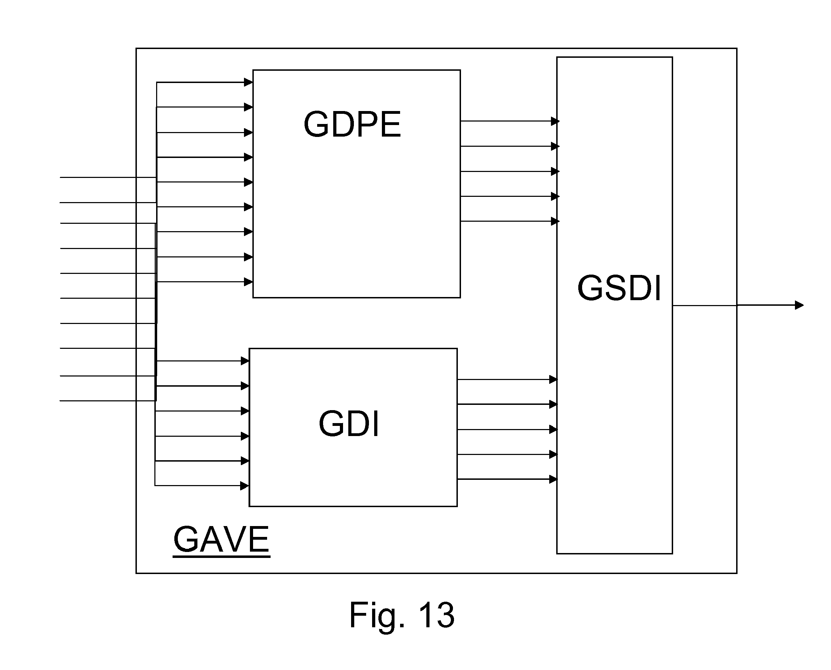

Fig. 13 depicts, in more detail, the exemplary green alternative value estimation block GAVE which comprises a green direction probability evaluation block GDPE, a green direction interpolation block GDI and a greed soft switch direction interpolation block GSDI.

The block GDPE computes differences between the neighbouring green pixels in the four main directions (horizontal, vertical and diagonals), so that the green soft switch direction interpolation block GSDI can determine which one is the best:

$$
P1 = abs(RO(n2p4) - RO(n2p0))
$$

$$
P2 = abs(RO(n6p2) - RO(n0p2))
$$

$$
P3 = abs(RO(n3p3) - RO(n1p1))
$$

$$
P4 = abs(RO(n3p1) - RO(n1p3))
$$

The block GDI the average values of the green pixels in the four main directions:

$$I1 = (RO(n2p4) + RO(n2p0))/2$$

$$I2 = (RO(n6p2) + RO(n0p2))/2$$

$$I3 = (RO(n3p3) + RO(n1p1))/2$$

$$I1 = (RO(n3p1) + RO(n1p3))/2$$

The block GSDI is used to switch softly from one direction to the other using the probability of each direction.

So, block GAVE outputs an alternative output value AO(). for current pixel n2p2, the alternative output value AO(n2p2) may be determined as:

$$AO(n2p2) = (P1*I1 + P2*I2 + P3*I3 + P4*I4) / (P1+P2+P3+P4)$$

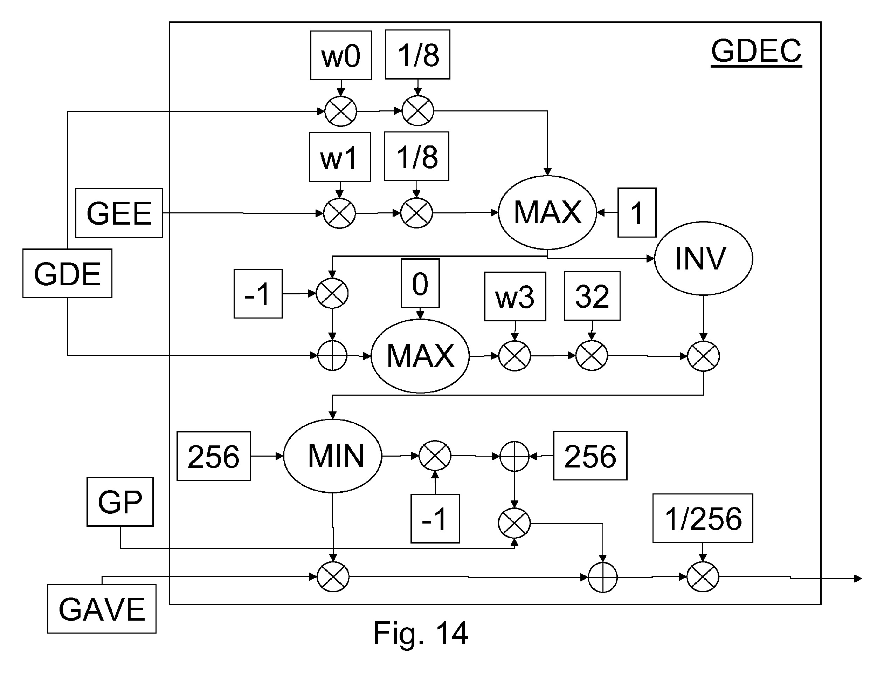

Fig. 14 depicts, in more detail, the exemplary green pixel defect correction block GDEC.

The block GDEC determines if the green pixel has to be considered as defective, and correct it accordingly. The correction includes also a soft switching to switch progressively between correction and no correction.

The parameters w0 and w1 are used to determine the thresholds from which the green pixel will start to be corrected.

The other parameter w2 is used for the soft switch between the original pixel value and the alternate value output by block GAVE.

The block INV is used for inverting its input, i.e. the output of block MAX, which determines a maximum among the output of block GDE weighted by weight w0, the output of block GEE weighted by weight w1 and One, is raised to the power of minus one.

The output of block GDEC is a processed output value for the green pixel currently processed.

Thus, an imaging device for processing a target pixel is described, wherein if said target pixel and neighbouring pixels are green colour pixels, said imaging device further comprises a green defectiveness evaluation unit adapted for receiving raw output values of the target pixel and the neighbouring pixels as input and for outputting a filtered defectiveness value and a maximum of further defectiveness values, both being determined using the received raw output values. The imaging device then further comprises a green entropy evaluation unit adapted for receiving raw output values of the target pixel and the neighbouring pixels as input and for outputting an activity value determined using the received raw output values, a green alternative value evaluation unit adapted for receiving raw output values of the target pixel and the neighbouring pixels as input and for outputting an alternative output value using the received raw output values, and a green defective pixel estimation and correction unit adapted for receiving said defectiveness value and said maximum of further defectiveness values, said activity value, said raw output value of the target pixel and said alternative output value as inputs and for outputting a weighted sum of said raw output value of the target pixel and said alternative output value wherein said green defective pixel estimation and correction unit is adapted for using the defectiveness value, the maximum of further defectiveness values and said activity value for determining weights for said raw output value of the target pixel and said alternative output value.

If target pixel and said neighbouring pixels are red or blue colour pixels, said imaging device may further comprise a further defectiveness evaluation unit adapted for receiving raw output values of the target pixel and the neighbouring pixels as input as well as further raw output values of further neighbouring pixels being green colour pixels and for outputting a filtered defectiveness value and a maximum of further defectiveness values, both being determined using the received raw output values, a further entropy evaluation unit adapted for receiving raw output values of the target pixel and the neighbouring pixels as well as further raw output values of further neighbouring pixels being green colour pixels as input and for outputting an activity value determined using the received raw output values, a further alternative value evaluation unit adapted for receiving raw output values of the target pixel and the neighbouring pixels as well as further raw output values of further neighbouring pixels being green colour pixels as input and for outputting an alternative output value using the received raw output values, and a further defective pixel estimation and correction unit adapted for receiving said defectiveness value and said maximum of further defectiveness values, said activity value, said raw output value of the target pixel and said alternative output value as inputs and for outputting a weighted sum of said raw output value of the target pixel and said alternative output value wherein said green defective pixel estimation and correction unit is adapted for using the defectiveness value, the maximum of further defectiveness values and said activity value for determining weights for said raw output value of the target pixel and said alternative output value.

The Red defective pixel detection & correction block RDC and the Blue defective pixel detection & correction block BDC are identical to each other and both similar to the Green defective pixel detection & correction block GDC.

Therefore, only Red defective pixel detection & correction block RDC is described in detail.

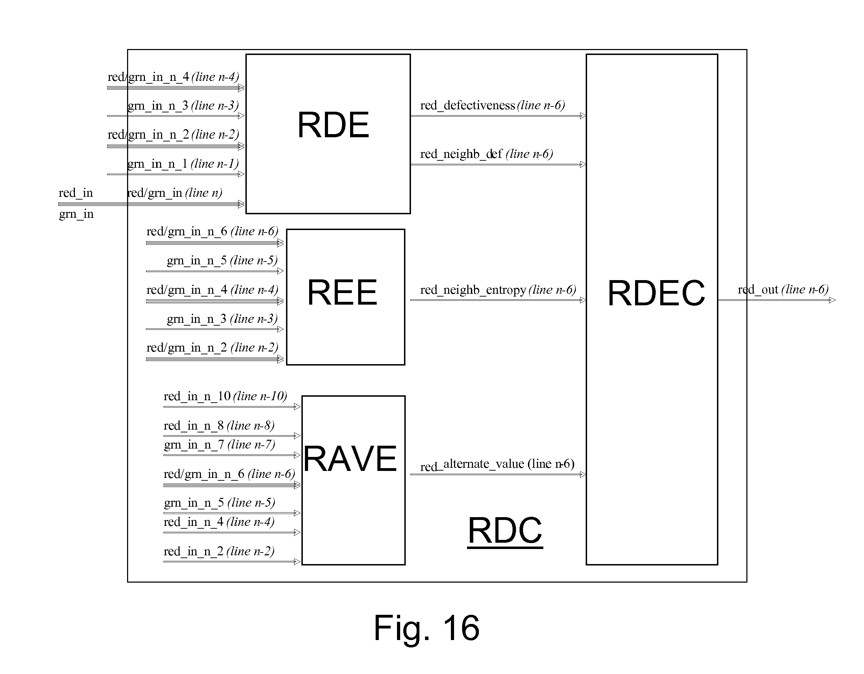

The main difference between block RDC, depicted in fig. 16, and block GDC resides in that at least one of red defectiveness evaluation block RDE, red entropy evaluation block REE and red alternative value evaluation block RAVE not only takes red neighbouring pixels into account but also neighbouring pixels of green colour. The same applies to blue defectiveness evaluation block, blue entropy evaluation block and/or blue alternative value evaluation block.

For red pixels, a red min dir diff evaluation block evaluates the differences between the central pixel and its neighbours. This is done in different directions (for instance: horizontal, vertical, diagonals...) and under different curves (for instance. lines: 180˚ and corners: 90˚)

The minimum of all these differences is used for determining the defectiveness value. The different blocks used for the different curves compute internally the minimum between the different directions.

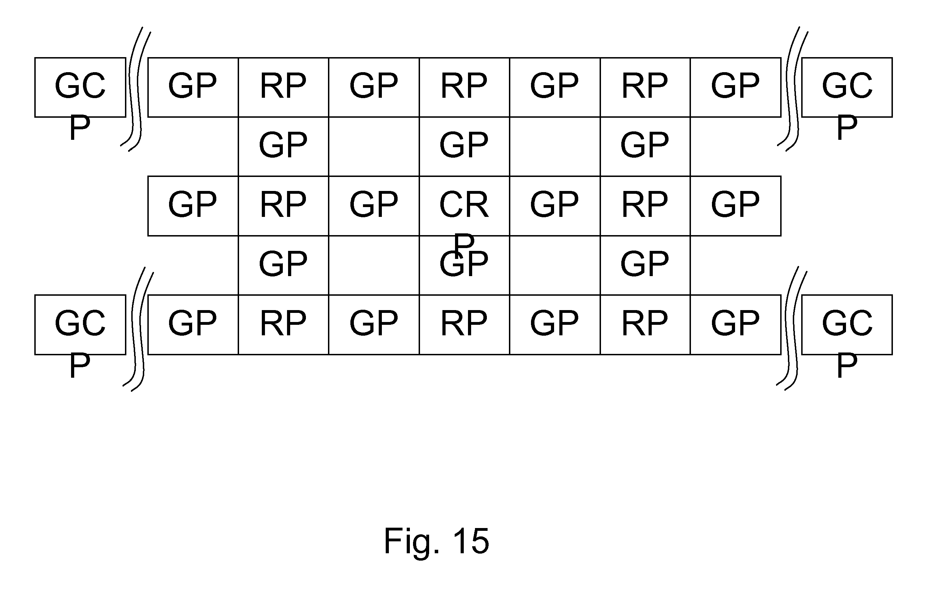

The Red dir diff pixels distribution block generates 22 different green pixel values and 9 different red pixel values corresponding to the 31 neighbouring pixels as exemplarily depicted in fig. 15.

That is current central red pixel CRP subject to output value processing is processed using green pixels GP and red pixels RP of a neighbourhood stretching three columns to each side and two rows preceding and succeeding the row of central red pixel CRP. Further, four green corner pixels GCP are taken into account. Said four green corner pixels GCP are located in columns separated by four further columns from the column of central red pixel CRP and in rows separated by one further row from the row of central red pixel CRP.

Comparisons are done in the same direction (horizontal direction) for the red pixels and the green pixels. The comparisons are computed in different axes but in the same direction, and these comparisons are then filtered using mainly a median filter to compensate for the potential defective green pixels.

Fig. 16 depicts an exemplary red pixel detection and correction block RDC comprising an exemplary red defect estimation block RDE, an exemplary red entropy estimation block REE, an exemplary red alternative value estimation block RAVE and an exemplary red pixel defect correction block RDEC. These blocks may differ from their green counterparts in receiving -in addition to the raw output values of red pixels- raw output of green pixels. An exemplary blue pixel detection and correction block may haven an identical structure as said red pixel detection and correction block.

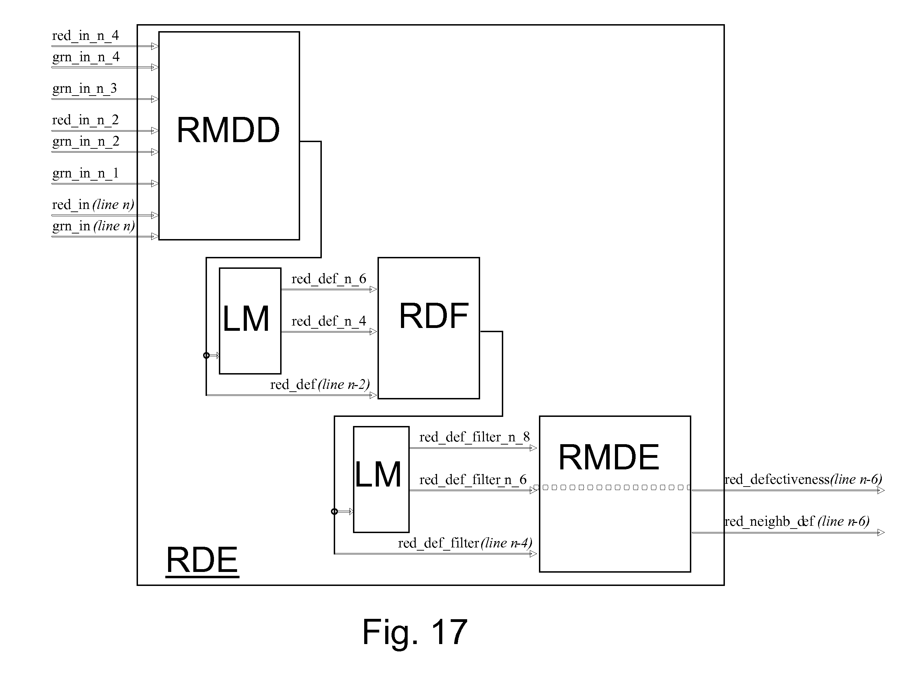

Fig. 17 depicts, in more detail, the exemplary red defect estimation block RDE comprising an exemplary red minimum defect direction block RMDD, an exemplary red defect filtering block RDF and an exemplary red maximum defect evaluation block RMDE.

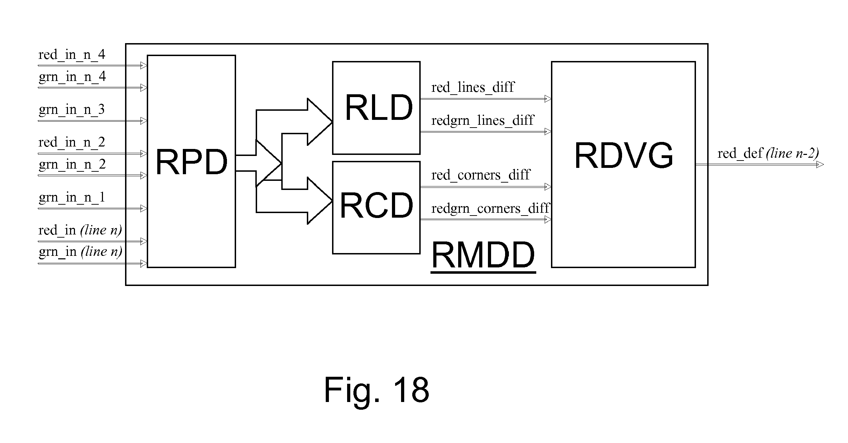

Fig. 18 depicts, in more detail, the exemplary red minimum direction difference block RMDD comprising an exemplary red pixel distribution block RPD, an exemplary red line difference block RLD and an exemplary red corner difference block RCD.

The block RDF of fig. 17 is used for detecting the defective red pixels in critical cases. The red defectiveness map is filtered by this Red defectiveness filtering block RDF.

For a current red pixel under processing being n2p5, the filtering may be

$$D_f(n2p2) = (D(n4p7) + D(n4p5) + D(n4p3) + D(n2p7) + D(n2p3)$$
$$+ D(n0p7) + D(n0p5) + D(n0p3) + 3*D(n2p5))/8$$

After the filtering the neighbourhood defectiveness value ND() is determined in block RMDE wherein ND() is the maximum among the filtered defectiveness values assigned to the current red pixel n2p5 and each of its neighbouring red pixels n4p7, n4p5, n4p3, n2p7, n2p3, n0p7, n0p5 and n0p3 is determined:

$$ND(n2p5) = max(D_f(n4p7) + D_f(n4p5) + D_f(n4p3) + D_f(n2p7) +$$
$$D_f(n2p3) + D_f(n0p7) + D_f(n0p5) + D_f(n0p3))/8$$

Only if current red pixel n2p5 is assigned a local maximum defectiveness value, i.e. if $D_f(n2p5)>ND(n2p5)$, red pixel n2p5 is considered as potentially defective pixel.

Further, the Red entropy evaluation block REE comprises red local entropy evaluation block, line memory LM and red entropy filtering block which performs a filtering of entropy values corresponding the filtering of defectiveness values in block RDF.

That is, Red entropy evaluation block REE analyses the red neighbourhood to measure the local activity (called entropy) much the same way as block GEE with the difference, that the neighbourhood of a red pixel comprises more pixels as depicted in fig. 15. The local activity of the red neighbourhood is first filtered and then compared with the defectiveness value determined for a centre red pixel.

When the entropy value is high, the defectiveness values will usually also be higher. This means that for a same defectiveness value, the pixel has a higher probability to be defective if the entropy is low.

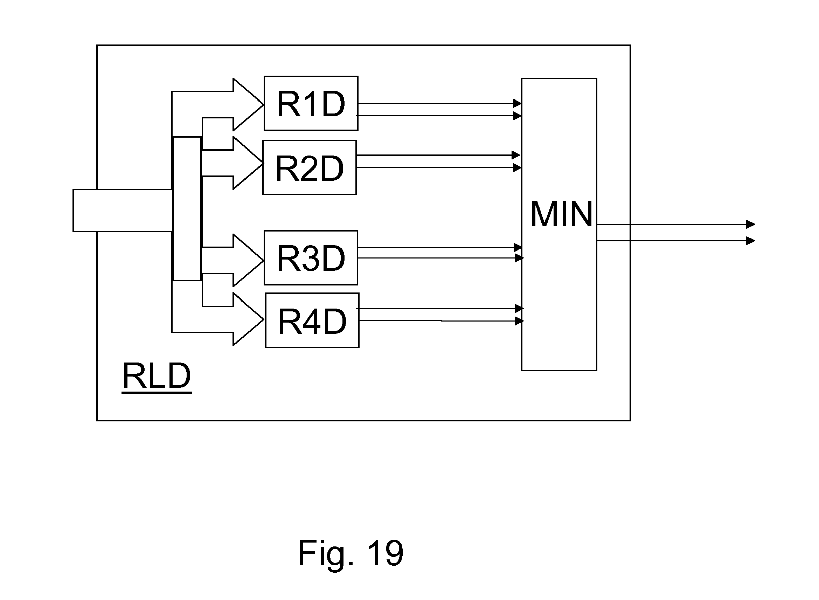

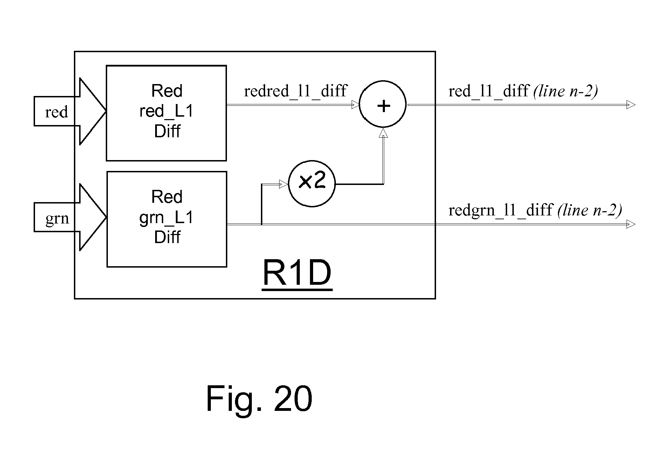

Fig. 19 depicts, in more detail, the exemplary red line difference block RLD comprising bloc R1D, depicted in fig. 20, which compares differences between green pixels and differences between red pixels, both in the same direction.

That is, comparisons are done in the same direction (horizontal direction) for the red (in Redred_l1_diff block) and the green (in Redgrn_11_diff block). The Redgrn_l1_diff block computes comparisons in different axes (but in the same direction), and these comparisons are then filtered using mainly a median filter to compensate for the potential defective green pixels.

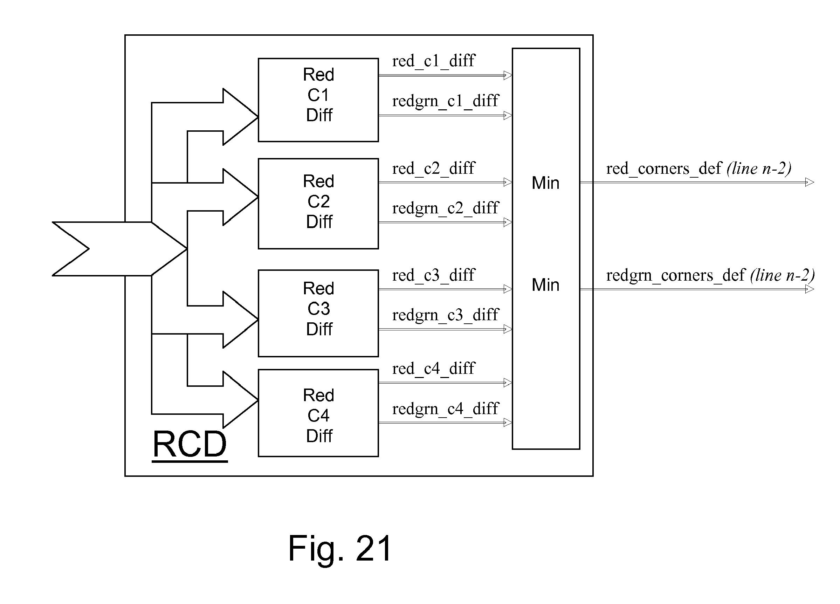

Fig. 21 depicts a detail of the exemplary red corner difference block RCD. The Red_c1_diff to Red_c4_diff blocks are similar. The only difference is a permutation of the inputs.

For instance, block Red_c1_diff compares differences between green pixels and differences between red pixels, both in the same type of corner.

That is, comparisons are done in the same corner type (e.g. horizontal starting turning downwards) for the red pixels and the green pixels.

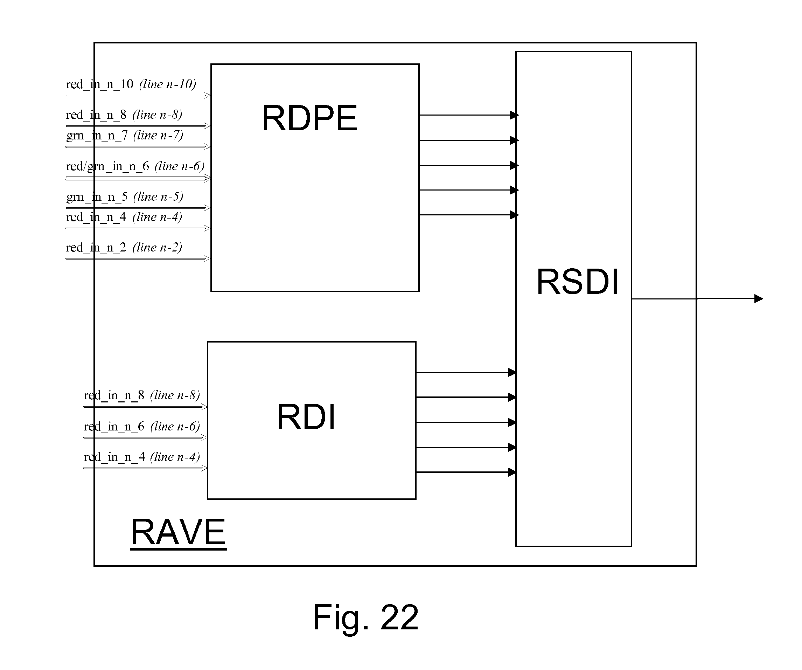

Fig. 22 depicts, in more detail, the exemplary red alternative value estimation block RAVE comprising an exemplary red direction probability evaluation block RDPE.

The block RAVE looks mainly at the neighbour red pixels to determine an alternate red value. This alternate value will be used in case the red pixel is considered as defective for gradually correcting the red pixel detected as defective.

The alternative value is determined by looking to four different directions and taking the most probable direction to interpolate the alternate value. Block RAVE may operate on red pixels in an identical manner as block GAVE operates on green pixels.

In block RAVE, a soft switch comprised in block RSDI is used to switch "softly" (progressively) from one direction to the other.

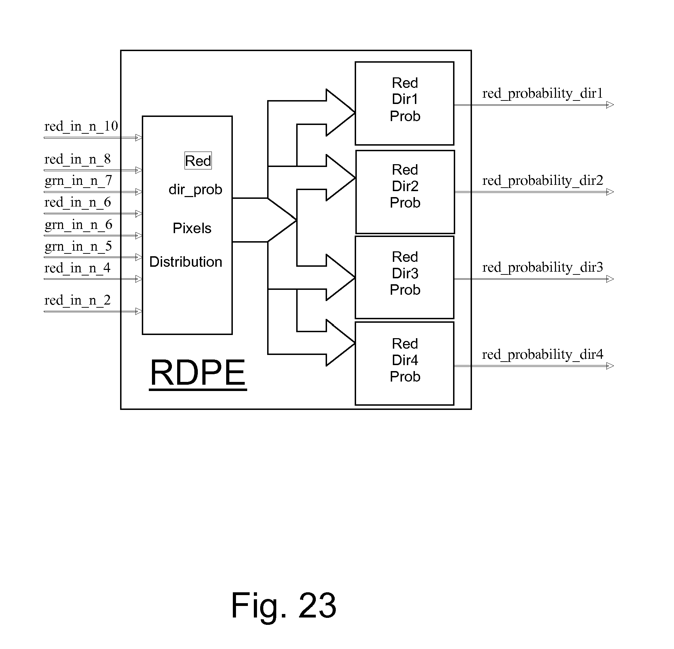

Fig. 23 depicts, in more detail, the exemplary red direction probability evaluation block RDPE.

The block RDPE computes mainly differences between the neighbour red pixels in the four main directions (horizontal, vertical & diagonals), so that the Red soft switch direction interpolation block RSDI can determine which one is the best. Block RDPE may operate on red pixels in an identical manner as block GDPE operates on green pixels.

The block RDPE computes differences between the neighbour red pixels in the four main directions (horizontal, vertical and diagonals), so that the red soft switch direction interpolation block RSDI can determine which one is the best:

$$P'1 = abs(RO(n2p7) - RO(n2p3))$$

$$P'2 = abs(RO(n4p5) - RO(n2p5))$$

$$P'3 = abs(RO(n4p7) - RO(n0p3))$$

$$P'4 = abs(RO(n4p3) - RO(n0p7))$$

The block RDI the average values of the red pixels in the four main directions:

$$I'1 = (RO(n2p7) + RO(n2p3))/2$$

$$I'2 = (RO(n4p5) + RO(n2p5))/2$$

$$I'3 = (RO(n4p7) + RO(n0p3))/2$$

$$I'1 = (RO(n4p3) + RO(n0p7))/2$$

The block RSDI is used to switch softly from one direction to the other using the probability of each direction.
So, block RAVE outputs an alternative output value AO(). For current red pixel n2p5, the alternative output value AO(n2p5) may be determined as:

$$AO(n2p5) = (P'1*I'1 + P'2*I'2 + P'3*I'3 + P'4*I'4) / (P'1+P'2+P'3+P'4)$$

The Red defective pixel estimation & correction block RDEC determines if the red pixel has to be considered as defective, and correct it accordingly. The correction includes also a soft switch to switch progressively between correction and no correction.
The structure of block RDEC may equal the structure of block GDEC with correspondingly replaced inputs. Then parameters may be used to determine the thresholds from which the red pixel will start to be corrected.
Another may used for the soft switch between the original pixel value RO(n2p5) and the alternative output value outputted by block RAVE.

**Claims**

1. Method for processing a raw output value of a target pixel, wherein said target pixel has a colour, is comprised in an imaging device and is surrounded in the imaging device, at least partly, by neighbouring pixels which have said colour and provide further raw output values, the method comprising:

 - using the raw output value and the further raw output values for determining a filtered defectiveness value for the target pixel,
 - using the further raw output values for determining a threshold value,
 - using the further raw output values for determining an alternative output value,
 - using the filtered defectiveness value and the threshold value for determining a first weight for weighting the alternative output value and for determining a second weight for weighting the raw output value and
 - adding the alternative output value weighted with said first weight to the raw output value weighted with the second weight.

**2.** Method of claim 1, wherein determining the filtered defectiveness value for the target pixel comprises:

- (a) determining, for the target pixel, defectiveness value candidates wherein each defectiveness value candidate is determined using the raw output value of said target pixel and the further raw output values of pairs of the neighbouring pixels,
- (b) determining a minimum among the determined defectiveness value candidates,
- (c) repeating steps (a) and (b) for other pixels and
- (d) determining a weighted sum of the determined minima wherein the minimum determined for the target pixel has a larger weight than each of the minima determined for the other pixels and
- (e) using the weighted sum for determining the filtered defectiveness value of the target pixel.

**3.** Method of claim 2, wherein, for each of said pairs of neighbouring pixels:

- one pixel of the respective pair is located in a row preceding the target pixel's row and the other pixel is located in a row succeeding the target pixel's row,
- one pixel of the respective pair is located in a column preceding the target pixel's column and the other pixel is located in a column succeeding the target pixel's column, or
- one pixel of the respective pair is located in the target pixel's column and the other pixel is located the target pixel's row.

**4.** Method of claim 2 or 3, wherein determining the threshold value comprises:

- determining an activity value using the further raw output values,
- determining a first maximum of the minima determined for the other pixels and
- determining the threshold value as maximum of: the activity value, the first maximum and a first non-zero constant.

**5.** Method of one of the preceding claims, further comprising

- determining a difference value between the filtered defectiveness value and the threshold value,
- determining whether the difference value is negative and if so, setting the difference value to zero,
- weighting the difference value using a user-defined weight divided by said threshold value,
- determining whether the weighted difference value is larger than a user-defined threshold value and if so, assigning, to the second weight, said user-defined threshold value, otherwise assigning, to the second weight, said weighted difference value,
- assigning, to the first weight, the difference between said user-defined threshold and said second weight.

**6.** Method of one of the preceding claims, wherein determining the alternative output value comprises:

- determining alternative value candidates and associated alternative value candidate probabilities wherein each alternative value candidate and its associated alternative value candidate probability are determined using the further raw output values of pairs of the neighbouring pixels, wherein, for each pair,

○ pixels are located at opposite sides of the target pixel in the target pixel's row,
○ pixels are located at opposite sides of the target pixel in the target pixel's column,
○ one pixel of the respective pair is located in a row immediately preceding the target pixel's row and in a column immediately preceding the target pixel's column and the other pixel is located in a row immediately succeeding the target pixel's row and in a column immediately succeeding the target pixel's column, or
○ one pixel of the respective pair is located in a row immediately preceding the target pixel's row and in a column immediately succeeding the target pixel's column and the other pixel is located in a row immediately succeeding the target pixel's row and in a column immediately preceding the target pixel's column.

- using the determined alternative value candidate probabilities for weighting the determined alternative value candidates and
- using a sum of the determined alternative value candidates for determining the alternative output value.

**7.** Method of one of the preceding claims, wherein the target pixel is a red colour pixel or a blue colour pixel and said method further comprises further using yet further raw output values of further neighbouring pixels being green colour pixels:

- for determining a filtered defectiveness value for the target pixel,
- for determining a threshold value, and/or
- for determining an alternative output value.

8. Imaging device comprising a target pixel having a colour and being surrounded, at least partly, by neighbouring pixels having said colour, wherein the pixels of the imaging device provide raw output values, said imaging device further comprises means for processing the raw output value of a target pixel, said means being adapted for performing the method of one of the preceding claims.

9. Imaging device of claim 8, wherein said target pixel and said neighbouring pixels are green colour pixels, said imaging device further comprising:

- a green defectiveness evaluation unit adapted for receiving raw output values of the target pixel and the neighbouring pixels as input and for outputting a filtered defectiveness value and a maximum of further defectiveness values, both being determined using the received raw output values,
- a green entropy evaluation unit adapted for receiving raw output values of the target pixel and the neighbouring pixels as input and for outputting an activity value determined using the received raw output values,
- a green alternative value evaluation unit adapted for receiving raw output values of the target pixel and the neighbouring pixels as input and for outputting an alternative output value using the received raw output values, and
- a green defective pixel estimation and correction unit adapted for receiving said defectiveness value and said maximum of further defectiveness values, said activity value, said raw output value of the target pixel and said alternative output value as inputs and for outputting a weighted sum of said raw output value of the target pixel and said alternative output value wherein said green defective pixel estimation and correction unit is adapted for using the defectiveness value, the maximum of further defectiveness values and said activity value for determining weights for said raw output value of the target pixel and said alternative output value.

10. Imaging device of claim 8 or 9, wherein said target pixel and said neighbouring pixels are red or blue colour pixels, said imaging device further comprising:

- a further defectiveness evaluation unit adapted for receiving raw output values of the target pixel and the neighbouring pixels as input as well as further raw output values of further neighbouring pixels being green colour pixels and for outputting a filtered defectiveness value and a maximum of further defectiveness values, both being determined using the received raw output values,
- a further entropy evaluation unit adapted for receiving raw output values of the target pixel and the neighbouring pixels as well as further raw output values of further neighbouring pixels being green colour pixels as input and for outputting an activity value determined using the received raw output values,
- a further alternative value evaluation unit adapted for receiving raw output values of the target pixel and the neighbouring pixels as well as further raw output values of further neighbouring pixels being green colour pixels as input and for outputting an alternative output value using the received raw output values, and
- a further defective pixel estimation and correction unit adapted for receiving said defectiveness value and said maximum of further defectiveness values, said activity value, said raw output value of the target pixel and said alternative output value as inputs and for outputting a weighted sum of said raw output value of the target pixel and said alternative output value wherein said green defective pixel estimation and correction unit is adapted for using the defectiveness value, the maximum of further defectiveness values and said activity value for determining weights for said raw output value of the target pixel and said alternative output value.

| GP | BP | GP | BP | GP | BP | GP |
|----|----|----|----|----|----|----|
| RP | GP | RP | GP | RP | GP | RP |
| GP | BP | GP | BP | GP | BP | GP |
| RP | GP | RP | GP | RP | GP | RP |
| GP | BP | GP | BP | GP | BP | GP |
| RP | GP | RP | GP | RP | GP | RP |
| GP | BP | GP | BP | GP | BP | GP |

Fig. 1

Fig. 2

EP 2 257 044 A1

Fig. 3

Fig. 4

EP 2 257 044 A1

Fig. 5

Fig. 6

Fig. 7

Fig. 8

Fig. 9

Fig. 10

EP 2 257 044 A1

| | GP' | | GP' | |
|---|---|---|---|---|
| GP' | | GP* | | GP' |
| | GP' | | GP' | |
| GP | | GP | | GP |

## Fig. 11

```
                GEE
  →  ┌────────┐        ┌────┐  →  ┌────────┐
  →  │        │        │ LM │  →  │        │
  →  │  GLEE  │───────→│    │  →  │  GEF   │  →
  →  │        │        │    │  →  │        │
  →  │        │        └────┘  →  │        │
     └────────┘                   └────────┘
```

## Fig. 12

Fig. 13

EP 2 257 044 A1

Fig. 14

| GCP | | GP | RP | GP | RP | GP | RP | GP | | GCP |
|-----|---|----|----|----|-----|----|----|----|---|-----|
|     |   |    | GP |    | GP  |    | GP |    |   |     |
|     |   | GP | RP | GP | CRP | GP | RP | GP |   |     |
|     |   |    | GP |    | GP  |    | GP |    |   |     |
| GCP | | GP | RP | GP | RP | GP | RP | GP | | GCP |

Fig. 15

red/grn_in_n_4 *(line n-4)*

grn_in_n_3 *(line n-3)*

red/grn_in_n_2 *(line n-2)*

grn_in_n_1 *(line n-1)*

red_in
grn_in        red/grn_in *(line n)*

**RDE**

red_defectiveness *(line n-6)*

red_neighb_def *(line n-6)*

red/grn_in_n_6 *(line n-6)*

grn_in_n_5 *(line n-5)*

red/grn_in_n_4 *(line n-4)*

grn_in_n_3 *(line n-3)*

red/grn_in_n_2 *(line n-2)*

**REE**

red_neighb_entropy *(line n-6)*

**RDEC**

red_out *(line n-6)*

red_in_n_10 *(line n-10)*

red_in_n_8 *(line n-8)*
grn_in_n_7 *(line n-7)*

red/grn_in_n_6 *(line n-6)*

grn_in_n_5 *(line n-5)*
red_in_n_4 *(line n-4)*

red_in_n_2 *(line n-2)*

**RAVE**

red_alternate_value (line n-6)

**RDC**

## Fig. 16

Fig. 17

EP 2 257 044 A1

Fig. 18

Fig. 19

Fig. 20

Fig. 21

EP 2 257 044 A1

red_in_n_10 *(line n-10)*

red_in_n_8 *(line n-8)*
grn_in_n_7 *(line n-7)*

red/grn_in_n_6 *(line n-6)*

grn_in_n_5 *(line n-5)*
red_in_n_4 *(line n-4)*

red_in_n_2 *(line n-2)*

RDPE

RSDI

red_in_n_8 *(line n-8)*

red_in_n_6 *(line n-6)*

red_in_n_4 *(line n-4)*

RDI

RAVE

Fig. 22

Fig. 23

**EUROPEAN SEARCH REPORT**

Application Number

EP 09 30 5502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 594 308 A (DIALOG SEMICONDUCTOR GMBH [DE]) 9 November 2005 (2005-11-09) * paragraphs [0010], [0014] * ----- | 1-10 | INV. H04N5/217 |
| X | US 7 092 018 B1 (WATANABE TOHRU [JP]) 15 August 2006 (2006-08-15) * column 7, line 14 - line 20 * * column 7, line 53 - line 63 * ----- | 1-10 | |

TECHNICAL FIELDS
SEARCHED      (IPC)

H04N

The present search report has been drawn up for all claims

| Place of search | Date of completion of the search | Examiner |
|---|---|---|
| The Hague | 4 September 2009 | Bequet, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 09 30 5502

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2009

| Patent document cited in search report | | Publication date | Patent family member(s) | | Publication date |
|---|---|---|---|---|---|
| EP 1594308 | A | 09-11-2005 | US | 2005248671 A1 | 10-11-2005 |
| US 7092018 | B1 | 15-08-2006 | CN | 1295255 A | 16-05-2001 |
| | | | JP | 3773773 B2 | 10-05-2006 |
| | | | JP | 2001197372 A | 19-07-2001 |
| | | | KR | 20010067343 A | 12-07-2001 |
| | | | TW | 479432 B | 11-03-2002 |
| | | | US | 2006232691 A1 | 19-10-2006 |

EPO FORM P0459

For more details about this annex : see Official Journal of the European Patent Office, No. 12/82

## REFERENCES CITED IN THE DESCRIPTION

**Patent documents cited in the description**

- US 03971065 A

- US 2009040343 A